# EUROPÄISCHE PATENTANMELDUNG

(11) **EP 0 542 191 A1**
(43) Veröffentlichungstag der Anmeldung: **19.05.1993**
(21) Anmeldenummer: 92119199.5
(22) Anmeldetag: 10.11.1992
(51) Int. Cl.: B01D 33/04, E03F 5/14, B01D 33/27

(54) **Abscheidevorrichtung**

(30) Priorität: 15.11.1991 DE 4137710
(71) Anmelder: E + M MASCHINENBAU GmbH, D-95003 Hof (DE)
(72) Erfinder: Etschel, Helmut, W-8670 Hof (Saale) (DE); Wirth, Hermann, W-8662 Helmbrechts (DE)
(74) Vertreter: Reinhard - Skuhra - Weise & Partner

(57) **Zusammenfassung**

Die Erfindung betrifft eine Abscheidevorrichtung, insbesondere für Kläranlagen, mit einem über Umlenkeinrichtungen geführten Rechensieb aus hintereinander geschalteten Rechensiebpartien. Jede Rechensiebpartie besteht aus Rechenlamellen und Auswerflamellen und jede Rechensiebpartie weist wenigstens zwei Achsen auf, von welchen die in Bewegungsrichtung vorne liegende Achse ein Ende der Rechenlamellen lagert und das vorne liegende Ende der Auswerflamellen führt, während das in Bewegungsrichtung vorne liegende Ende der Auswerflamellen auf derjenigen Achse gelagert ist, die das in Bewegungsrichtung hintere Ende der Rechenlamellen der vorangehenden Rechensiebpartie lagert. Jede Rechenlamelle trägt einen in Richtung auf die Umlenkeinrichtung weisenden Vorsprung und jede Umlenkeinrichtung ist mit wenigstens zwei Gruppen von Mitnehmereinrichtungen versehen, mit welchen der Vorsprung der Rechenlamellen in Eingriff bringbar ist und die peripher zu den Umlenkeinrichtungen sowie parallel zur Achse der Umlenkeinrichtungen angeordnet sind.

## Beschreibung

Die Erfindung betrifft eine Abscheidevorrichtung, insbesondere für Kläranlagen, mit einem über Umlenkeinrichtungen geführten Rechensieb aus hintereinander geschalteten Rechensiebpartien.

Eine Abscheidevorrichtung, insbesondere für Kläranlagen, ist aus der DE- 39 10 464 C2 bekannt, bei der ein Rechensiebpartie, bestehend aus einer Vielzahl von hintereinander geschalteten Rechensiebpartien über Umlenkeinrichtungen ähnlich einem Förderband geleitet wird, um Gegenstände oder Partikel aus Schmutzwasser oder Abwasser zu eliminieren. Jede Rechensieb besteht aus einer Mehrzahl von parallel zueinander liegenden Rechenlamellen, die ähnlich einer umlaufenden Kette bewegt werden und mit ihren nach außen abstehenden Haken Gegenstände wie Feststoffe erfassen und aus dem Abwasser herausführen. Zur Reinigung des Rechensiebs dient ein Reinigungskamm, der mit den Rechenlamellen gekämmt und die Rechenlamellen von Feststoffen befreit.

Der Erfindung liegt die Aufgabe zugrunde, eine Abscheidevorrichtung der vorstehend beschriebenen Art dahingehend zu verbessern, daß sämtliche Rechenlamellen einer Siebpartie gleichzeitig angetrieben werden und zugleich ein Reinigen und Abwerfen der Feststoffe an einer vorgegebenen Stelle ohne Verwendung von Rechensieben möglich ist.

Diese Aufgabe wird erfindungsgemäß dadurch gelöst, daß jede Rechensiebpartie aus Rechenlamellen und Auswerflamellen besteht, und daß jede Rechensiebpartie wenigstens zwei Achsen aufweist, von welchen die in Bewegungsrichtung vorne liegende Achse ein Ende der Rechenlamellen lagert und das vorne liegende Ende der Auswerflamellen führt, während das in Bewegungsrichtung vorne liegende Ende der Auswerflamellen auf derjenigen Achse gelagert ist, die das in Bewegungsrichtung hintere Ende der Rechenlamellen der vorangehenden Rechensiebpartie lagert.

Die Erfindung schafft eine Abscheidevorrichtung, bei der innerhalb einer Rechenpartie vorzugsweise abwechselnd nebeneinander eine Rechenlamelle und eine Auswerflamelle angeordnet sind.

Gemäß einer bevorzugten Ausführungsform dienen quer zum Rechensieb verlaufende Stäbe, an den Umlenkeinrichtungen ausgebildete Stäbe zum Antrieb des Rechensiebes. Durch unterschiedliche Beabstandung der Stäbe zur Achse der betreffenden Mitnehmereinrichtung läßt sich die Wirkung der Mitnehmereinrichtungen in Bezug auf die Rechenlamellen abstimmen. Eine Gruppe der vorzugsweise durch Stäbe gebildeten Mitnehmereinrichtungen weist einen größeren Abstand zur Achse der Umlenkeinrichtung auf als die andere Gruppe und gewährleistet in der Hauptbewegungsrichtung, das heißt im Vorlauf, eine hohe Kraftübertragung, während die andere Gruppe von Mitnehmereinrichtungen mit kleinerer Distanz zur Achse der Umlenkeinrichtung überwiegend dazu dient, einen Rücklauf des Rechensiebes für Wartungszwecke zu ermöglichen.

Gemäß einer weiteren Ausgestaltung der Erfindung ist eine Umlenkeinrichtung als Abwerfeinrichtung vorgesehen. Diese als Abwerfeinrichtung fungierende Umlenkeinrichtung weist eine weitere Gruppe von Mitnehmereinrichtungen auf, welche die Auswerflamellen aus einer zu den Rechenlamellen parallelen Lage herausbewegt und zur Entfernung von Feststoffen oder dergleichen von dem Rechensieb dient.

Gemäß einer weiteren Ausführungsform der Erfindung ist in Verbindung mit der als Abwerfeinrichtung dienenden Umlenkeinrichtung eine Wischereinheit vorgesehen, die mit den Auswerflamellen in Eingriff gelangt und sich zugleich mit der Drehung des Rechensiebes um eine feste Achse dreht, wodurch die Auswerflamellen während ihrer Bewegung über einen vorgegebenen Winkel um die als Abwerfeinrichtung dienende Umlenkeinrichtung gereinigt werden.

Nachfolgend werden bevorzugte Ausführungsformen der Erfindung anhand der Zeichnungen zur Erläuterung weiterer Merkmale beschrieben.
Es zeigen:
- Fig. 1: eine schematische Darstellung einer Abscheidevorrichtung gemäß einer bevorzugten Ausführungsform,
- Fig. 2: eine Teilansicht einer Umlenkeinrichtung mit einem Teil des Rechensiebs,
- Fig. 3: eine Ansicht einer Rechenlamelle und einer Auswerflamelle zur Erläuterung ihrer lagemäßigen Zuordnung,
- Fig. 4: eine Aufsicht auf einen Teil des Rechensiebs
- Fig. 5: eine Teilseitenansicht einer als Abwerfeinrichtung konzipierten Umlenkeinrichtung, und
- Fig. 6: eine schematische Darstellung einer Wischereinheit zusammen mit der zugehörigen Abwerfeinrichtung.

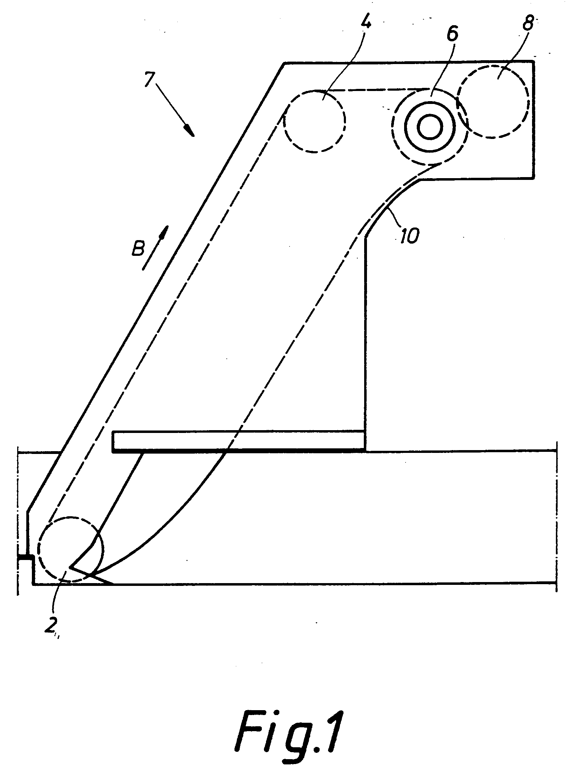

Fig. 1 zeigt in schematischer Darstellung eine Abscheidevorrichtung, die gemäß dem dargestellten Ausführungsbeispiel aus einer ersten Umlenkeinrichtung 2, einer zweiten Umlenkeinrichtung 4 und einer dritten Umlenkeinrichtung 6 besteht. Die Umlenkeinrichtung 6 dient hierbei als Abwerfeinrichtung. Bei der Abscheidevorrichtung nach Fig. 1 kann im Bedarfsfall eine der Umlenkeinrichtungen 4, 6 entfallen, so daß nur zwei Umlenkeinrichtungen vorhanden sind. Ersichtlicherweise läßt sich die Zahl der Umlenkeinrichtungen entsprechend im Bedarfsfall erhöhen oder erniedrigen und die positionsmäßige Zuordnung verändern. Die Abwerfeinrichtung 6 erfüllt den Zweck, aus Abwassern mittels des Rechensiebs entfernte Feststoffe oder dergleichen im Bereich der Umlenkung des Rechensiebs zum Beispiel in einem abgestellten Behälter abzugeben.

Bei der in Fig. 1 gezeigten Ausführungsform einer Abscheidevorrichtung ist im Bereich der als Abwerfeinrichtung dienenden Umlenkeinrichtung 6 zusätzlich eine Wischereinheit 8 vorgesehen, die der Reinigung des Rechensiebes 7 dient und auf dem Rechensieb befindliche Feststoffe oder dergleichen an einer definierten Stelle vom Rechensieb 7 abstreift. Zur Führung des Rechensiebes 7 zwischen den Umlenkeinrichtungen 6 und 2 kann zusätzlich ein Umlenkblech 10 oder dergleichen vorgesehen sein.

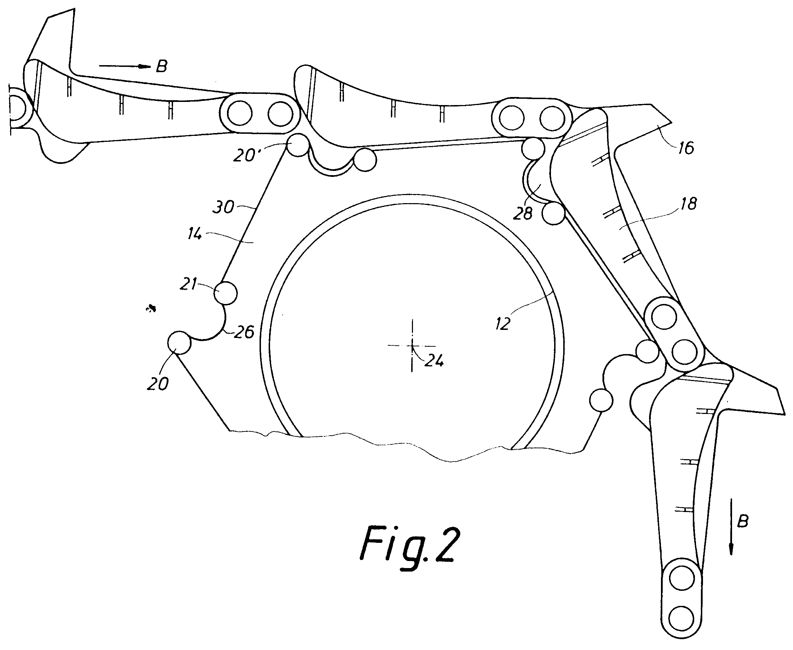

Fig. 2 gibt eine Teilansicht einer Umlenkeinrichtung wieder, die vorzugsweise die Umlenkeinrichtungen 2 und/oder 4 der in Fig. 1 gezeigten Ausführungsform bildet. Die Umlenkeinrichtung gemäß Fig. 2 besteht aus einer Rolle oder einer Trommel 12, auf welcher umfangsmäßig und in Richtung der Drehachse zueinander beabstandet Mitnehmerscheiben 14 angebracht sind, welche die in Fig. 2 ersichtliche, auf Mitnehmerlamellen 16 und Auswerflamellen 18 abgestimmte Form haben.

An der nach außen weisenden Kante jeder Mitnehmerscheibe 14 sind mehrere Mitnehmereinrichtungen, vorzugsweise in Form von Stäben 20, 21, befestigt. Bei der in Fig. 2 dargestellten Ausführungsform sind die Stäbe 20, 21 nur geringfügig in die Mitnehmerscheibe 14 eingesetzt oder sie stehen von der Mitnehmerscheibe 14 ab.

Bei dem Ausführungsbeispiel einer Umlenkeinrichtung nach Fig. 2 ist eine erste Gruppe von Stäben 20 vorgesehen, die einen vorgegebenen Abstand zur Drehachse 24 der Umlenkeinrichtung aufweisen. Eine zweite Gruppe von Stäben 21 ist in vorgegebener Distanz zu den Stäben 20 bzw. um einen vorbestimmten Winkel zu den Stäben 20 versetzt angeordnet, wobei die Stäbe 21 der zweiten Gruppe eine kürzere Distanz zur Drehachse 24 einhalten als die Stäbe 20. Die Außenkante 30 der Scheibe 14 verläuft vom Stab 21 vorzugsweise linear nach außen, das heißt der Abstand zur Drehachse 24 wird größer, bis die Kante 30 den Stab 20' der nächsten Gruppe erreicht. Zwischen jedem Stab 20 und dem Stab 21 ist vorzugsweise eine Aussparung oder Vertiefung vorgesehen, die mit 26 bezeichnet ist. Die Aussparung 26 hat den Zweck, einen an der Rechenlamelle 16 ausgebildeten Vorsprung 28 aufzunehmen, falls die Rechenlamellen 16 in Flucht der Scheiben 14 angeordnet sind. Gemäß Fig. 2 befindet sich im Uhrzeigersinn hinter jedem Stab 20 eine Aussparung 26, der ein Stab 21 folgt, wonach die Kante 30 geradlinig nach Außen bis zum nächsten Stab 20' verläuft. Demzufolge hält die Kante 30 nach dem Stab 21 einen kleineren Abstand zur Drehachse 24 ein als am Stab 20. Dies bedeutet, daß die Kante 30 vom Stab 21 zum Stab 20' mit zunehmendem Radius zur Drehachse 24 ausgebildet ist. Die Stäbe 20, 21 usw. sind fest in die Mitnehmerscheibe 14 eingesetzt, vorzugsweise mit den betreffenden Mitnehmerscheiben 14 verschweißt.

Die vorstehend beschriebene Gestaltung des Kantenverlaufs der Mitnehmerscheiben 14 wiederholt sich jeweils in Richtung des Umfanges der Mitnehmerscheiben 14, wie aus Fig. 2 hervorgeht.

Die Stäbe 20, 21 verlaufen über die gesamte Breite der Umlenkeinrichtung, das heißt, die Mitnehmerscheiben 14 und über die durch die Mitnehmerscheiben 14 definierten Abstände oberhalb der Trommel 12, so daß der Eingriff mit den Rechenlamellen 16 des umlaufenden Rechensiebs am Außenumfang jeder Trommel 12 gewährleistet ist.

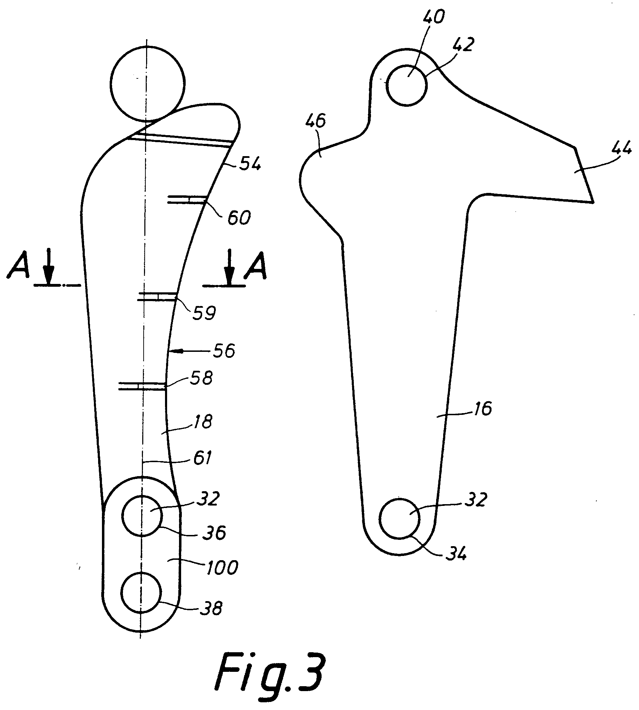

Das Rechensieb besteht aus einzelnen, hintereinander geschalteten Rechensiebpartien, die jeweils vorzugsweise durch nebeneinander liegende Rechenlamellen 16 und Auswerflamellen 18 gebildet sind. Ein Beispiel einer Rechenlamelle 16 und einer Auswerflamelle 18 zeigt Fig. 3 in ihrer jeweiligen Lagezuordnung. Aus Fig. 2 und 3 ist erkennbar, daß die Rechenlamellen 16 und Auswerflamellen 18 mit Ausnahme ihres Bewegungsweges über einen noch zu beschreibende Auswerfeinrichtung weitgehend parallel zueinander liegen.

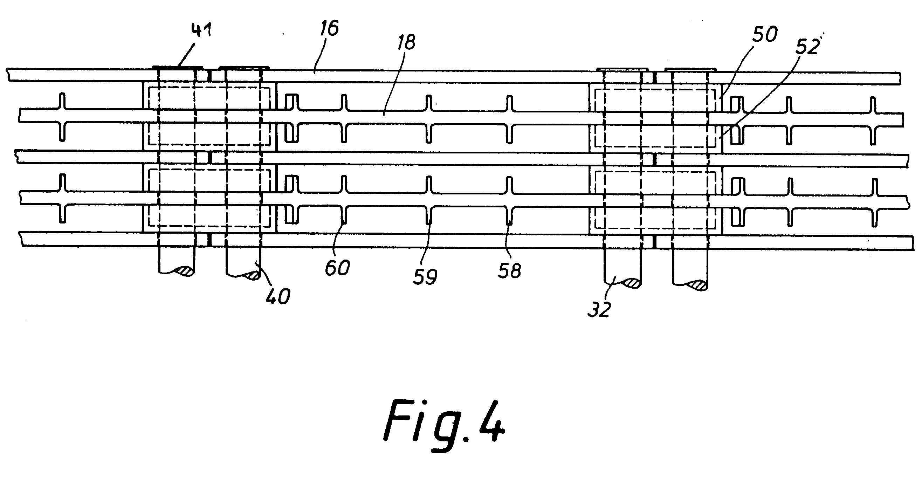

Gemäß der Darstellung nach Fig. 3 und 4 ist in Bewegungsrichtung gesehen an der Vorderseite jeder Rechensiebpartie eine erste Achse 32 vorgesehen, beispielsweise in Form einer Schraube. Die Achse 32 geht durch eine in Bewegungsrichtung betrachtet am vorderen Ende, ausgebildete Öffnung 34 der Rechenlamelle 16 hindurch, sowie durch eine entsprechende Öffnung 36 der Auswerflamelle 18, wobei am vordersten Ende der Auswerflamelle 18 eine weitere derartige Öffnung 38 ausgebildet ist. Im rückwärtigen Teil jeder Rechensiebpartie befindet sich eine Achse 40, vorzugsweise in Form einer Schraube, die durch die Öffnung 42 am hinteren Ende jeder Rechenlamelle vorgesehen ist. Gleichzeitig geht die Achse 40 durch die am vordersten Ende liegende Öffnung 38 jeder Auswerflamelle 18 hindurch, wie Fig. 4 zeigt.

Jede Rechenlamelle 16 weist einen Hakenabschnitt 44 auf sowie einen Vorsprung 46, die in Bezug auf die Achse jeder Rechenlamelle 16 etwa einander gegenüberliegen. Zur Form jeder Rechenlamelle 16 wird auf Fig. 3 verwiesen. Bei den innerhalb des Rechensiebs liegenden Rechenlamellen 16 weist der Hakenabschnitt 44 nach außen und der Vorsprung 46 nach innen bzw. in Richtung auf die Drehachse(n).

Der Vorsprung 46 jeder Rechenlamelle 16 kann leicht gebogen oder auch hakenförmig ausgebildet sein und hat eine Schulterbreite, die etwa dem Abstand zweier benachbarter Stäbe 20, 21 entspricht.

Während die Rechenlamelle 16 an ihren beiden Enden im Bereich der Öffnungen 34, 40 gelagert ist, wird jede Auswerflamelle 18 nur am vorderen Ende im Bereich der Öffnungen 36, 38 gelagert. Zwischen jeweils einer Auswerflamelle 18 und einer Rechenlamelle 16 sind Abstandselemente 50, 52 vorgesehen, welche einen vorgegebenen Abstand zwischen seitlich benachbarten Rechen- und Auswerflamellen festlegen.

Wie Fig. 2 zeigt, werden die das Rechensieb bildenden Rechenlamellen 16 und Auswerflamellen 18 in weitgehend paralleler Lage zueinander um die Umlenkeinrichtung nach Fig. 2 herum bewegt, wobei der Hakenabschnitt 44 jeder Rechenlamelle 16 nach außen etwa senkrecht zur Bewegungsbahn absteht und im Falle der Umlenkeinrichtung 2, die innerhalb eines Abwasserkanals oder dergleichen positioniert ist, Feststoffe oder dergleichen aus dem Abwasser heraus erfaßt.

Jede Auswerflamelle 18 hat im wesentlichen die Form eines Löffels mit einer leicht nach außen ansteigenden Flanke 54, wobei die Länge der Auswerflamellen zwischen der Mitte der Öffnung oder Bohrung 36 und dem hierzu entfernt liegenden freien Ende kleiner gewählt ist als der Abstand zwischen den beiden Bohrungen 34 und 42 der Rechenlamelle 16.

Die Bewegungsrichtung des Rechensiebs ist in Fig. 2 durch den Pfeil B verdeutlicht.

Gemäß einer weiteren Ausgestaltung der Erfindung ist das Rechensieb entsprechend der vorstehenden Beschreibung aufgebaut, wobei jede Auswerflamelle 18 mit seitlichen Rippen versehen ist, die vorzugsweise nur nahe der nach außen weisenden Kante 56 ausgebildet sind. Die Rippen sind sowohl aus Fig. 3 und Fig. 4 ersichtlich und in Fig. 3 mit 58, 59, 60 bezeichnet. Die Rippen 58 bis 60 haben im wesentlichen zum Ziel, den Durchgang von Feststoffen durch den seitlichen Abstand zwischen Rechenlamelle 16 und Auswerflamelle 18 zu verhindern. Bei Rechensieben mit kleinen Abmessungen haben die Rippen 58 bis 60 zusätzlich eine Führungsfunktion, das heißt sie bewirken eine gegenseitige Abstützung der Rechenlamellen 16 und Auswerflamellen 18 während des Bewegungsablaufs und haben eine Breite, die etwa dem seitlichen Abstand zwischen Rechenlamelle 16 und Auswerflamelle 18 entspricht. Gemäß Fig. 3 verlaufen die Rippen 58, 59, 60 etwa senkrecht zu der durch die Mitte der beiden Öffnungen 32, 38 hindurchgehenden Achse 61.

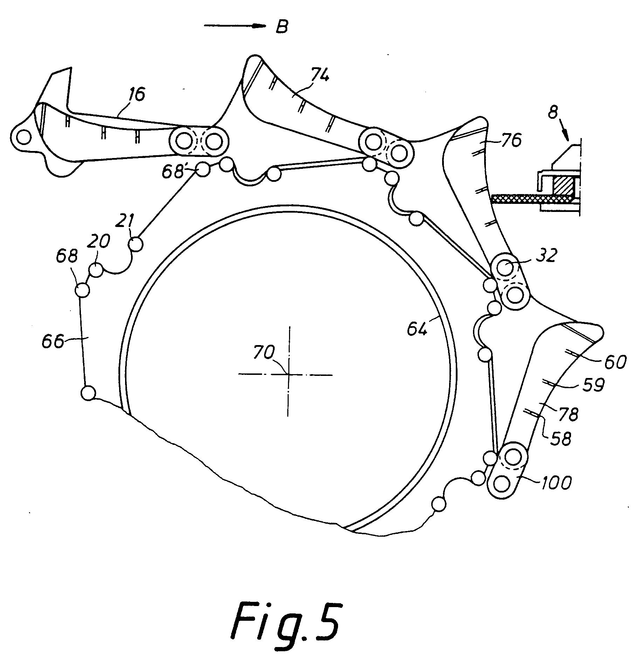

Fig. 5 zeigt eine bevorzugte Ausführungsform einer Umlenkeinrichtung, die als Abwerfeinrichtung dient und die Auswerflamellen 18 im Verlaufe ihrer Bewegung um die Abwerfeinrichtung radial gegenüber der Abwerfeinrichtung zu verlagern.

Gemäß Fig. 5 ist eine mit 64 bezeichnete Trommel oder dergleichen vorgesehen, an deren Umfang in Richtung der Drehachse 70 zueinander beabstandet Mitnehmerscheiben 66 angeordnet sind. Die Formgebung der Mitnehmerscheiben 66 entspricht im wesentlichen derjenigen, wie sie in Verbindung mit Fig. 2 beschrieben ist, jedoch ist eine zusätzliche Gruppe von Mitnehmereinrichtungen 68, 68' vorgesehen. Die Mitnehmereinrichtungen 68, 68' sind vorzugsweise durch Stäbe gebildet, die einen größeren Abstand zur Achse 70 der Auswerfeinrichtung einnehmen als die Stäbe 20.

Zweck der zusätzlichen Mitnehmerstäbe 68, 68' ist es, die Auswerflamellen 18 so zu verstellen, daß deren und zu der Öffnung 38 abgewandtes freies Ende radial von der Auswerfeinrichtung weg bewegt wird. Wie Fig. 5 zeigt, werden die Auswerflamellen aus ihrer parallelen Lage gegenüber den Rechenlamellen 16 im Uhrzeigersinn verschwenkt, wie es durch die Auswerflamellen dargestellt ist, die in Fig. 5 mit 74, 76, 78 bezeichnet sind. Die Schwenkbewegung der Auswerflamellen 74, 76, 78 im Uhrzeigersinn wird durch die Anlage der Stäbe 68 an der Unterkante der betreffenden Auswerflamellen 74, 76, 78 hervorgerufen und dadurch, daß die Stäbe 68 auf einem größeren Radius angeordnet sind als die Stäbe 20, 21. Zugleich drücken die Stäbe 68, 68' auf die Abstandselemente zwischen jeder Rechenlamelle 16 und Auswerflamelle 18. Nach dem Umlauf um die Abwerfeinrichtung gemäß Fig. 5 werden die Achsen 32 wieder in Richtung auf die Abwerfeinrichtung das heißt entgegen dem Uhrzeigersinn zurückverlagert, was eine Bewegung der freien Enden der Auswerflamellen 74, 76, 78 bis zu ihrer parallelen Lage gegenüber den Rechenlamellen 16 zur Folge hat.

Zusammenfassend wird festgehalten, daß die Stäbe 68 gegen die Unterkante der Auswerflamellen 74, 76, 78 drücken und dadurch ein Herausschwenken dieser Auswerflamellen aus ihrer ursprünglich parallel zu den Rechenlamellen 16 befindlichen Position zur Folge haben. Durch diese Bewegung der Auswerflamellen 74, 76, 78 werden Feststoffe, die sich auf dem Rechensieb befinden, aus diesem herausgedrückt und von dem Rechensieb entfernt.

Die Umlenk- und Abwerfeinrichtungen sind bei den vorstehend beschriebenen Ausführungsformen durch eine Trommel mit an deren Außenumfang angebrachten Mitnehmerscheiben 14 gebildet sind. Ersichtlicherweise kann auch eine Welle mit entsprechend großen Scheibenkränzen oder dergleichen Verwendung finden, ohne daß die Funktionsfähigkeit der Umlenk- und Abwerfeinrichtungen beeinträchtigt wird.

Die in Fig. 5 dargestellte Abwerfeinrichtung weist vorzugsweise einen Antrieb in Form eines Planetengetriebes auf, das heißt einen innerhalb der Trommel 64 liegenden Antrieb. Bei dieser Ausführungsform befindet sich somit der Antrieb der in Fig. 1 gezeigten Abschaltevorrichtung im Bereich der mit 6 bezeichneten Abwerfeinrichtung. Die Anordnung des Antriebs im Bereich der Abwerfeinrichtung 6 hat sich als vorteilhaft erwiesen, weil bei dieser Ausführungsform keine Entspannung des Rechensiebs zwischen der oberen Umlenkeinrichtung 4 und der Abwerfeinrichtung 6 eintritt.

Aus der vorstehenden Beschreibung ergibt sich, daß die den Antrieb beinhaltende Abwerfeinrichtung 6 bezüglich des Rechensiebs alle nebeneinander liegenden Rechenlamellen einer Rechensiebpartie antreibt und nicht nur einen Teil der Rechenlamellen jeder Rechensiebpartie. Dadurch, daß die Stäbe 20 im Verhältnis zu den Stäben 21 relativ weit gegenüber der Drehachse 70 der Trommel 64 entfernt liegen, ergibt sich ein sicherer Eingriff zwischen dem Nocken oder Vorsprung 46 und den Stäben 20 im Vorlaufbetrieb, das heißt im Normalbetrieb der Abscheidevorrichtung mit der dem Pfeil B entsprechenden Bewegungsrichtung. Gleichzeitig ist eine Reversierung der Laufrichtung des Rechensiebs bzw. der Rechensiebkette für Wartungszwecke möglich, wobei in diesem Fall die Stäbe 21 gegen die Vorsprünge 46 der Rechenlamellen 16 drücken. Die Stäbe 68 haben damit ausschließlich die Funktion, die Auswerflamellen 18 in der in Verbindung mit Fig. 5 beschriebenen Art aus ihrer ansonsten parallen Lage zu den Rechenlamellen 16 herauszuverlagern, um das Entfernen von Feststoffen oder dergleichen vom Rechensieb zu bewirken.

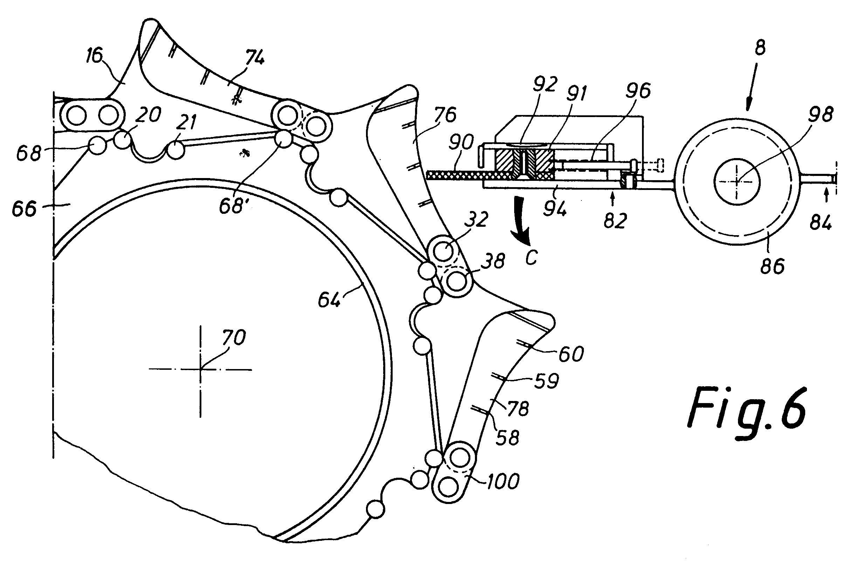

Die im Zusammenhang mit Fig. 1 beschriebene Wischereinheit 8 befindet sich an einer vorgegebenen Position seitlich der Abwerfeinrichtung gemäß Fig. 5. Einzelheiten der Wischereinheit 8 sind in Fig. 6 gezeigt. Die Wischereinheit 8 ist über einen Kettenantrieb vorzugsweise fest mit der Trommel 64 verbunden, derart, daß die Drehgeschwindigkeit der Wischereinheit 8 einem Mehrfachen derjenigen der Trommel 64 entspricht. Gemäß Fig. 6 befindet sich die Wischereinheit 8 an der abfallenden Seite des Rechensiebs, jedoch noch in demjenigen Bereich, in welchem die Auswerflamellen ihre aus dem Rechensieb herausverlagerte Position einnehmen.

Bei der in Fig. 6 gezeigten Ausführungsform einer Wischereinheit 8 besteht die Wischereinheit aus zwei symmetrischen Wischerblättern 82, 84, die diametral einander gegenüberliegend auf einer Hülse oder einem Rohr 86 befestigt sind. Das Rohr dreht sich vorzugsweise mit einer Geschwindigkeit von etwa 4:1 gegenüber der Trommel 64, wodurch gewährleistet ist, daß gemäß Fig. 6 das Wischerblatt 82 entgegen dem Uhrzeigersinn über die vordere Kante der in Fig. 6 mit 76 bezeichneten Auswerflamelle streicht, wonach das mit 84 bezeichnete Wischerblatt in Berührung mit der Auswerflamelle 74 gelangt entsprechend der Weiterbewegung des Rechensiebs. Die Wischerblätter 82, 84 haben eine Breite, die vorzugsweise der Gesamtbreite des Rechensiebs entspricht, so daß jeweils ein Wischerblatt über sämtliche Auswerflamellen einer Rechensiebpartie hinwegbewegt wird. Jedes Wischerblatt 82, 84 bewegt sich somit vom freien Ende der Auswerflamellen in Richtung auf die mit 32 bezeichnete Achse, bevor das Wischerblatt auSer Eingriff mit der betreffenden Gruppe von Auswerflamellen gelangt. Zum Ausgleich der Distanz zwischen den nach außen oder nach vorne weisenden Kanten der Auswerflamellen im Verhältnis zur Welle der Wischereinheit 8 ist jedes Wischerblatt federnd am Rohr 86 gelagert. Diese Lagerung sei anhand des Wischerblattes 82 erläutert. Das Wischerblatt 82 besteht aus einer vorzugsweise aus Kunststoff hergestellten Platte 90, die durch einen Führungsklotz 91 zwischen zwei weitgehend zueinander parallelen Metallplatten 92, 94 verschiebbar gelagert ist. Eine mit 96 bezeichnete Feder übt eine Vorspannung auf die durch die Teile 90,91 gebildete Einheit aus und ermöglicht damit eine Reziprokbewegung der Platte 90 im Verhältnis zu den Führungsplatten 92, 94. Die Bewegungsrichtung des Wischerblattes 82 ist in Fig. 6 durch den Pfeil C verdeutlicht, das heißt es ist eine gegenüber der Bewegungsrichtung des Rechensiebes gegenläufige Bewegung vorgesehen.

Die Wischerwelle, auf welcher die Wischereinheit 8 befestigt ist, dreht sich synchron zur Abwerfeinrichtung bzw. der Trommel 64, so daß jeweils ein Wischerblatt mit den Abwerflamellen in Kontakt gelangt. Durch die Wischbewegung der Wischereinheit 8 werden nicht nur Feststoffe, sondern auch klebrige Partikel von den Auswerflamellen entfernt.

Die vorzugsweise an den Auswerflamellen ausgebildeten, senkrecht zur Achse der Auswerflamellen verlaufenden Rippen 58, 59, 60 verhindern vorteilhafterweise das Eindringen von größeren Partikeln oder Teilen in den Spalt zwischen den Auswerflamelle 18 und Rechenlamelle 16. Wahlweise können die Rippen oder Führungsstege 58, 59, 60 auch derart groß und weit von der Auswerflamelle 18 abstehend ausgebildet sein, daß sie in Führungskontakt mit der benachbarten Rechenlamelle 16 gelangen und dadurch eine Stabilisierung zwischen den seitlich zueinander angeordneten Auswerflamellen und Rechenlamellen während der Bewegung des Rechensiebs hervorrufen.
Aus vorstehender Beschreibung ist ersichtlich, daß die Wischerblätter 82, 84 bzw. die darin gelagerten plattenförmigen Elemente 90 durch eine Federvorspannung in Richtung auf die Auswerflamellen 18 gedrückt werden und während der Bewegung der Auswerflamellen, z. B. der Auswerflamellen 74, 76, 78, um die zugehörige Drehachse 70 herum einen Gleitbewegung ausführen, die parallel zu den Lagerplatten 92, 94 erfolgt, während sich das Wischerblatt 82 gleichzeitig um eine mit 98 bezeichnete Drehachse dreht. Die Platten 90 führen damit eine Reziprokbewegung während ihrer Drehung um die Drehachse 98 aus und werden stets in Richtung auf diejenigen Auswerflamellen 18 zu Beginn ihres Eingriffs mit den Auswerflamellen 18 gedrückt, deren Reinigung sie entsprechend dem jeweiligen Arbeitszyklus vornehmen.

Gemäß vorliegender Erfindung ist es wesentlich, daß bezüglich der den Antrieb enthaltenden Umlenkeinrichtung sämtliche Rechenlamellen in Eingriffsbeziehung mit den Mitnehmereinrichtungen 20 und/oder 21 gelangen, die eine Rechensiebpartie bilden und somit nicht nur einzelne der Rechenlamellen 16 einer Siebpartie in Eingriffsbeziehung mit der Antriebseinheit stehen. Der Eingriff zwischen Rechensieb und der jeweiligen Mitnehmereinrichtung erfolgt über einen Winkel, der gemäß Fig. 1 von der Bewegungsbahn des Rechensiebs um die betreffende Umlenkeinrichtung abhängt.

Zu diesem Zweck weist jede Umlenkeinrichtung die peripher zur Umlenkeinrichtung angeordneten und parallel zur Drehachse 70 der jeweiligen Umlenkeinrichtung liegenden Mitnehmereinrichtungen, vorzugsweise in Form der Stäbe 20, 21 und/oder 68 auf. Die Stäbe 20, 21 und 68 sind vorzugsweise Rundstäbe, können jedoch auch durch Hohlstäbe oder vergleichbare Elemente gebildet werden, die sich über die gesamte Breite der jeweiligen Umlenkeinrichtung entsprechend der Breite des bewegten Rechensiebs erstrecken.

Bei einer bevorzugten Ausführungsform beträgt der Spalt zwischen einer Auswerflamelle 18 und einer Rechenlamelle 8 mm. Die Gesamtbreite des Rechensiebs beträgt bei einer bevorzugten Ausführungsform etwa 600 mm bis 2500 mm. Die Rechenlamellen 16 und Auswerflamellen 18 bestehen aus Kunststoff und haben eine Stärke von etwa 4 mm. Ein derartiges Rechensieb bzw. eine derartige Abscheidevorrichtung dient somit zum Entfernen von vergleichbar feinen Feststoffen und wird auch als Feinrechenanordnung bezeichnet.

Aus Fig. 3 ist ferner ersichtlich, daß die Auswerflamellen 18 jeweils im Bereich ihrer beiden Führungs- oder Lagerbohrungen 36, 38 zwei mit 100 bezeichnete seitliche plane Führungsflächen aufweisen, an welchen entsprechend der Form dieser Führungsfläche 100 geformte Distanzelemente 50 anliegen (Fig. 4).

## Patentansprüche

1. Abscheidevorrichtung, insbesondere für Kläranlagen, mit einem über Umlenkeinrichtungen geführten Rechensieb aus hintereinander geschalteten Rechensiebpartien,
**dadurch gekennzeichnet**,
daß jede Rechensiebpartie aus Rechenlamellen (16) und Auswerflamellen (18) besteht,
daß jede Rechensiebpartie wenigstens zwei Achsen (32, 40) aufweist, von welchen die in Bewegungsrichtung vorne liegende Achse (32) ein Ende der Rechenlamellen (16) lagert und das vorne liegende Ende der Auswerflamellen (18) führt, während das in Bewegungsrichtung vorne liegende Ende der Auswerflamellen (18) auf derjenigen Achse (40) gelagert ist, die das in Bewegungsrichtung hintere Ende der Rechenlamellen (16) der vorangehenden Rechensiebpartie lagert,
daß jede Rechenlamelle (16) einen in Richtung auf die Umlenkeinrichtung (2, 4, 6) weisenden Vorsprung (46) trägt, daß jede Umlenkeinrichtung (2, 4, 6) mit wenigstens zwei Gruppen von Mitnehmereinrichtungen (20, 21) versehen ist, mit welchen der Vorsprung (46) der Rechenlamellen in Eingriff bringbar ist und die peripher zu den Umlenkeinrichtungen (2, 4, 6) sowie parallel zur Achse der Umlenkeinrichtungen (2, 4, 6) angeordnet sind.

2. Abscheidevorrichtung nach Anspruch 1,
**dadurch gekennzeichnet**,
daß eine Umlenkeinrichtung (6) als Abwerfeinheit ausgebildet ist und eine weitere Gruppe von Mitnehmereinrichtungen (68) aufweist.

3. Abscheidevorrichtung nach Anspruch 2,
**dadurch gekennzeichnet**,
daß die zusätzliche Gruppe von Mitnehmereinrichtungen (68) peripher zu sowie parallel zu der Achse der Umlenkeinrichtung angeordnet ist.

4. Abscheidevorrichtung nach einem der vorangehenden Ansprüche,
**dadurch gekennzeichnet**,
daß die Gruppen von Mitnehmereinrichtungen (20, 21, 68), jeweils unterschiedlichen Radius zur jeweiligen Umlenkeinrichtung (2, 4, 6) aufweisen.

5. Abscheidevorrichtung nach wenigstens einem der vorangehenden Ansprüche,
**dadurch gekennzeichnet**,
daß die Mitnehmereinrichtungen (20, 21, 68) durch Stäbe gebildet sind.

6. Abscheidevorrichtung nach Anspruch 5,
**dadurch gekennzeichnet**,
daß die Stäbe durch peripher zu den Umlenkeinrichtungen (2, 4, 6) angeordnete Distanzelemente (14) gelagert sind, wobei die Distanzelemente (14) in Richtung der Drehachse der Umlenkeinrichtungen (2, 4, 6) zueinander beabstandet angeordnet sind.

7. Abscheidevorrichtung nach Anspruch 6,
**dadurch gekennzeichnet**,
daß die Distanzelemente (14) durch Scheiben gebildet sind.

8. Abscheidevorrichtung nach wenigstens einem der vorangehenden Ansprüche,
**dadurch gekennzeichnet**,
daß die Auswerflamellen (18) seitliche Stege (58, 59, 60) aufweisen.

9. Abscheidevorrichtung nach wenigstens einem der vorangehenden Ansprüche,
**dadurch gekennzeichnet**,
daß eine Wischereinheit (8) vorgesehen ist, die um eine Drehachse drehfähige Wischerblätter (82, 84) aufweist, welche zum Abstreifen der Auswerflamellen (18) mit diesen in Berührungskontakt bringbar sind.

10. Abscheidevorrichtung nach Anspruch 9,
**dadurch gekennzeichnet**,
daß die Wischereinheit im Takt mit einer der Umlenkeinrichtungen (6) angetrieben ist.

11. Abscheidevorrichtung nach Anspruch 9 oder 10,
**dadurch gekennzeichnet**,
daß die Wischerblätter (82, 86) durch eine Federeinrichtung (96) vorgespannt sind.
